Europäisches Patentamt

European Patent Office

Office européen des brevets

(19)

(11) Veröffentlichungsnummer: **0 203 558 B1**

# (12) EUROPÄISCHE PATENTSCHRIFT

(45) Veröffentlichungstag der Patentschrift: 09.10.91

(51) Int. Cl.⁵: **F24D 11/02**, F25B 17/08

(21) Anmeldenummer: **86107129.8**

(22) Anmeldetag: **26.05.86**

(54) **Vorrichtung und Verfahren zur Erwärmung von Wasser durch einen periodischen Adsorptionsprozess.**

(30) Priorität: 28.05.85 DE 3519086
20.01.86 DE 3601427

(43) Veröffentlichungstag der Anmeldung:
03.12.86 Patentblatt 86/49

(45) Bekanntmachung des Hinweises auf die
Patenterteilung:
09.10.91 Patentblatt 91/41

(84) Benannte Vertragsstaaten:
AT CH DE FR GB IT LI SE

(56) Entgegenhaltungen:
EP-A- 0 010 551
WO-A-84/04581
DE-A- 3 413 349

H.J. SAVER et AI, Heat Pump systems, Joh
Wiley & Sons, 1983, p. 287-290

(73) Patentinhaber: **ZEO-TECH Zeolith Technologie
GmbH
Westendstrasse 125
W-8000 München 2(DE)**

(72) Erfinder: **Maier-Laxhuber, Peter, Dr.
Saumweberstrasse 14
W-8000 München 60(DE)**
Erfinder: **Kaubek, Fritz, Dipl.-Ing.
Herbststrasse 14
W-8035 Gauting(DE)**

## Beschreibung

Die Erfindung betrifft eine Vorrichtung und ein Verfahren nach den Oberbegriffen der unabhängigen Patentansprüche 1 und 8.

Bekannt sind Heizkessel, welche die Rauchgase unter den Taupunkt abkühlen. Durch die Nutzung der Kondensationswärme, des bei der Verbrennung entstehenden Wasserdampfs, wird der Wärmeinhalt der Abgase besser genutzt. Mit sog. Brennwertkesseln sind Wirkungsgrade bis zu 108 % (vom unteren Heizwert) möglich. Voraussetzung ist, daß die Abgase möglichst weit unter 50°C abgekühlt werden, um einen größeren Wasserdampfanteil zu kondensieren. Brennwertkessel benötigen also ein entsprechend niedriges Temperaturniveau des Heizungswassers. Die von Brennwertkesseln austretenden Rauchgase sind mit Wasserdampf gesättigt. Eine weitere Abkühlung im Kamin führt zu unerwünschter Kondensatbildung. Ein Wärmepumpeneffekt ist mit Brennwertkesseln nicht möglich.

In der Wärmepumpentechnik sind Adsorptionssysteme bekannt, die in diskontinuierlichen Verfahren die eingesetzte Antriebsenergie durch Anhebung von Umgebungswärme vermehren.

Die DE-OS 34 13 349 & EP-A-0 158 326 (Stand der Technik nach Art. 54(3) EPÜ) beschreibt einen Adsorptionsapparat mit dem Stoffpaar Zeolith/Wasser im Einsatz als Nachtstrom-Wärmespeicher. Ein mit Zeolith gefüllter Behälter wird mittels elektrischer Heizelemente auf Temperaturen bis 300°C erhitzt. Dabei entweicht aus dem Zeolith Wasserdampf, der in einem Kondensator verflüssigt wird. Die Kondensationswärme wird an die Raumluft abgeführt. Das Kondensat tropft in einen Sammelbehälter. Tagsüber wird der Zeolithfüllung die gespeicherte Wärme entnommen. Der Zeolith kann wieder Wasserdampf adsorbieren. Das Kondensat im Sammeltank kühlt sich dadurch ab. Eine Kombination dieses Systems mit einem Heizkessel würde zu keiner besseren Nutzung der Rauchgase führen. Die hohen Zeolithtemperaturen erlauben es nicht, die Rauchgase unter 300°C abzukühlen. Während der Brennerlaufzeit ist der Sammeltank heiß; er kann von den Rauchgasen keine Wärme aufnehmen.

Der Erfindung liegt die Aufgabe zugrunde, unter optimaler Nutzung der zum Antrieb eines periodisch arbeitenden Adsorptionsapparates eingesetzten Rauchgase Wasser für Heizaufgaben zu erwärmen.

Diese Aufgabe wird gemäß den kennzeichnenden Teilen der unabhängigen Ansprüche gelöst.

Die Unteransprüche zeigen weitere vorteilhafte Ausbildungen des Verfahren und der Vorrichtung auf.

Während der Desorptionsphase wird die Zeolithfüllung im Zeolithbehälter erhitzt. Der aus dem Zeolith entweichende Wasserdampf kondensiert während dessen im Kondensator. Das Kondensat sammelt sich im Sammelbehälter. Das Absperrorgan zum Verdampfer ist dabei geschlossen. Das Heizungswasser wird vom Kondensator und den Rauchgasen, die den Hauptteil ihres Wärmeinhaltes bereits an den Zeolithbehälter übertragen haben, erwärmt. Im Verdampfer befindet sich Eis. Die Rauchgase werden über den Verdampfer geleitet und unter die Temperatur des Heizungswassers abgekühlt. Da die Eistemperatur im Verdampfer weit unter 0°C sinken kann, läßt sich der im Rauchgas enthaltene Wasserdampf auch ausfrieren. Im Verdampfer schmilzt durch die Wärmeaufnahme ein Teil der enthaltenen Eisfüllung. Um auch bei extrem kalten Außentemperaturen eine Taupunktunterschreitung im Schornstein zu vermeiden, können die Rauchgase nach Passieren des Verdampfers wieder erwärmt werden. Dies erfolgt vorteilhafterweise durch Aufnahme der Kesselverluste oder durch Abkühlen des Sammelbehälters. Sobald die Zeolithfüllung im Zeolithbehälter regeneriert ist und der Wasserdampf im Sammelbehälter als Kondensat vorliegt, wird der Brenner abgestellt. Das Heizungswasser wird nunmehr durch die im Zeolithbehälter gespeicherte bzw. freigesetzte Wärme erwärmt. Dies kann durch Wärmebrücken, durch einen separaten Wärmeträgerkreislauf oder durch Umlenkung des Heizungswassers über den Zeolithbehälter erfolgen. Besonders vorteilhaft ist es, den Heizungskreis in zwei parallele Kreise, in einen Sorptionskreis und in einen Kondensatorkreis aufzuspalten.

Die Massenströme werden über eine Reglereinrichtung gesteuert. Das Heizungswasser durchströmt dabei vorrangig den Kondensatorkreis. Falls in diesem Kreis der Wärmeanfall nicht ausreicht, wird ein Teilstrom oder auch der gesamte Heizungswasserstrom durch den Sorptionskreis geführt. Erst wenn auch hier das Wärmeangebot nicht ausreicht, wird die Beheizung des Zeolithbehälters eingeleitet. Durch diese Beheizung wird Wärme an den Sorptionskreis abgegeben. Überschreitet das Wärmeangebot den Wärmebedarf, wird der Heizungswasserstrom durch den Sorptionskreis solange reduziert, bis das Wärmeangebot aus dem Kondensatorkreis allein ausreicht. Falls die im Kondensatorkreis anfallende Kondensationswärme höher ist als der momentane Wärmebedarf, wird der Brenner getaktet. Falls dagegen die Kondensationswärme zur Deckung des Wärmebedarfs nicht ausreicht, wird über die Reglereinrichtung der Sorptionskreis teilweise hinzugeschaltet. Bei Erreichen einer bestimmten Zeolithtemperatur wird der Brenner abgestellt. Der Wärmebedarf wird nunmehr aus der im Zeolith freigesetzten Sorptionswärme und der fühlbaren Wärme gedeckt. Erst wenn die Wärmeabgabe nicht ausreicht, wird der Brenner wieder zugeschaltet und der Zeolith erneut desorbiert.

Eine Abkühlung der Zeolithfüllung führt zur erneuten Adsorption des ausgetriebenen Wasserdampfes. Der Inhalt des Sammelbehälters kühlt sich dadurch ab. Bevor das Kondensat gefriert, wird das Absperrorgan zum Verdampfer geöffnet. Das kalte Kondensat fließt in den Verdampfer ab und vermischt sich mit der Eisfüllung. Eine fortgesetzte Wärmeentnahme aus dem Zeolithbehälter führt jetzt zu einer Vergrößerung des Eisanteils im Verdampfer. Der Eisanteil im Eis-Wassergemisch schwankt somit je nach Betriebspunkt des Heizkessels. Am Ende der Adsorptionsphase ist der Eisanteil am höchsten. Die während dieser Phase erzeugte Eismenge ist größer, als die während der anschließenden Aufheizphase des Zeolithbehälters vom Rauchgas abgeschmolzen wird. Die überschüssige Eismenge kann entweder im Verdampfer verbleiben, für externe Kühlzwecke oder zur Aufnahme von Umgebungswärme genutzt werden. Der erfindungsgemäße Heizkessel arbeitet in diesem Fall als Sorptionswärmepumpe mit Eisspeicher. Im Sommerbetrieb läßt sich der Verdampfer für Kühl- oder Klimatisierungsaufgaben nutzen. Die dabei im Heizungwasser anfallende Wärme dient zur Erwärmung von Brauchwasser. Der Zeolitbehälter dient in diesem Fall als zusätzliches Wärmereservoir. In diesen Fällen ist es von Vorteil, die Kälte im Verdampfer erst bei Bedarf zu erzeugen. Das Absperrorgan bleibt in diesem Fall während der Adsorptionsphase geschlossen und wird nur bei Bedarf von Nutzkälte geöffnet. Um den Wasserinhalt im Verdampfer klein zu halten, kann ein Teil der Wasserfüllung in reinem separaten Wasserbehälter abgespeichert werden.

Der hier beschriebene Adsorptionsapparat ist mit Zeolith gefüllt. Daneben sind aber auch alle anderen, feste und flüssige Sorptionsstoffe einsetzbar.

In der Zeichnung ist die Erfindung beispielhaft dargestellt. Es Zeigen:

Fig.1      eine Skizze eines Adsorptionsapparates mit einem Sorptionskreis und einem Kondensatorkreis

Fig.2      einen Schnitt durch einen weiteren Adsorptionsapparat.

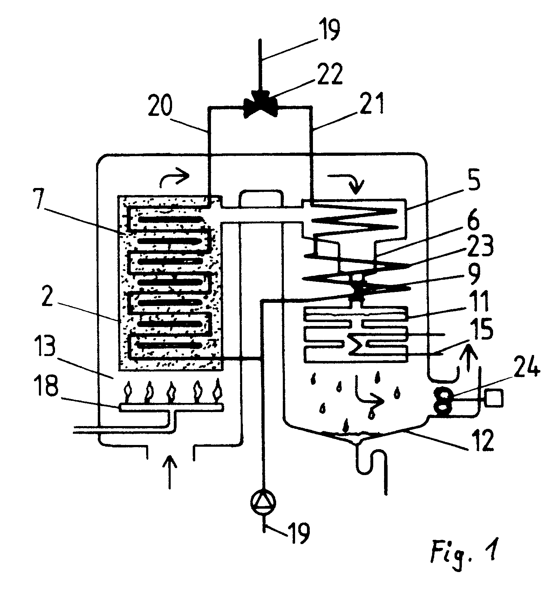

Der Adsorptionsapparat in Fig. 1 enthält einen Zeolithbehälter 2 mit einer Zeolithfüllung 7. An den Zeolithbehälter 2 sind der Reihe nach angeschlossen:

ein Kondensator 5, ein Sammelbehälter 6, ein Ventil 9 und ein Verdampfer 11. Ein Brenner 18 dient zur Beheizung des Zeolithbehälters 2.
Ein Ventilator 24 saugt die Verbrennungsgase ab.
Aus den Verbrennungsgasen wird Kondensat ausgeschieden, welches in der Kondensatwanne 12 gesammelt wird. Ein Heizungswasserkreis 19 teilt sich in zwei Kreise, einen Kondensatorkreis 21 und einen Sorptionskreis 20. Der Kondensatorkreis 21 enthält einen weiteren Wärmetauscher 23. Über ein Mischerventil 22 werden beide Kreise wieder zum Heizungswasserkreis vereinigt. Der Verdampfer 11 enthält eine größere Arbeitsmittelmenge und einen Wärmetauscher 15 zur Wärmeaufnahme aus der Umgebung.
Während der Brennerbetriebszeit wird die Zeolithfüllung 7 durch die Verbrennungsgase erhitzt. Gleichzeitig kann über den Sorptionskreis 20 Wärme an den Heizungswasserkreis 19 abgegeben werden. Da die Brennerleistung ein Mehrfaches der Nennwärmeleistung beträgt, übersteigt die Wärmeabgabe schnell den momentanen Wärmebedarf des Heizungswassers, zumal auch im Kondensator zunehmend Kondensationswärme freigesetzt wird. Das Mischerventil drosselt deshalb den Heizungswasserstrom durch den Sorptionskreis bis zur völligen Unterbrechung. In der Regel wird die Zeolithtemperatur während der Brennerbetriebszeit weit über die Siedetemperatur des Heizungswassers steigen. Im Sorptionskreis bildet sich dadurch ein Dampfpolster, welches das Heizungswasser verdrängt. Durch diese Verdrängung können keine Überdrücke im Heizungswasserkreis entstehen. Während der Beheizung des Sorptionsbehälters kondensiert im Kondensator Arbeitsmittel.
Dieses verflüssigte Arbeitsmittel sammelt sich im Sammelbehälter 6, da das Ventil 9 geschlossen ist. Im Verdampfer 11 befindet sich Eis, das im vorausgehenden Sorptionsprozess gebildet wurde. Die Kondensationswärme des Arbeitsmittels wird vom Kondensatorkreis abgeführt. Falls die anfallende Kondensationswärme zu groß ist, wird der Brenner getaktet, falls diese zu klein ist, wird über den Sorptionskreis die fehlende Wärmemenge ergänzt.
Die Verbrennungsgase kühlen sich zunächst am Zeolithbehälter 2, dann am Wärmetauscher 23 des Kondensatorkreises 21 und zuletzt am Verdampfer 11 ab. Über den Ventilator 24 werden sie aus dem Heizkessel entfernt.
Da der Verdampfer 11 Eis enthält, ist eine sehr effektive Abkühlung der Verbrennungsgase möglich. Die Ausscheidung von Wasserdampf und anderen Verbrennungsrückständen ist deshalb weit effektiver als dies bei Brennwertgeräten möglich ist. Über den Wärmetauscher 15 kann Umgebungswärme in den Verdampfer eingekoppelt werden. Durch den erfindungsgemäßen Eispuffer ist dies auch während der Brennerbetriebszeit möglich.

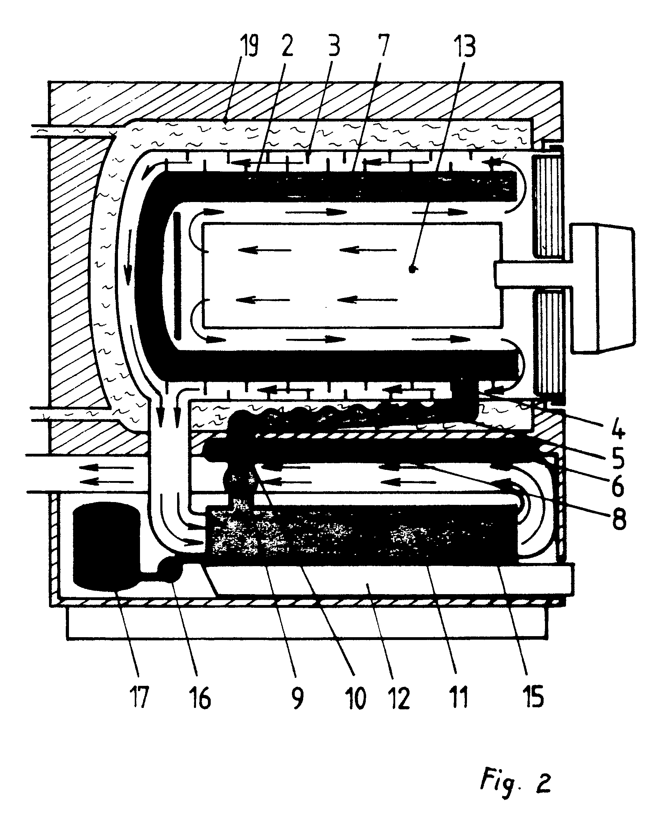

Fig. 2 zeigt eine Querschnitt durch einen weiteren beispielhaften Adsorptionsapparat.
Innerhalb eines Heizungswasserkreises 19 befindet sich ein Zeolithbehälter 2 um eine Brennkammer 13. Über Wärmeleitbleche 3 ist der Zeolithbehälter 2 an den Heizungswasserkreis 19 gekoppelt. Vom Zeolithbehälter 2 führt eine Dampfleitung 4 zu einem Kondensator 5 und einem Sammelbehälter 6. Der Zeolithbehälter 2 ist mit Zeolith 7 gefüllt. Der Sammelbehälter 6 kann die Kondensatmenge 8 aufnehmen. Ein Absperrorgan 9 ist in die Leitung 10 zwischen Sammelbehälter 6 und Verdampfer 11 eingebaut. Unter dem Verdampfer 11 befindet sich eine Wanne 12 zur Ableitung und Neutralisation des Rauchgaskondensates. Die Rauchgase werden von der Brennkammer 13 kommend über die Wärmeleitbleche 3, vorbei am Zeolithbehälter 2 an den Verdampfer 11 geführt und von dort über den Sammelbehälter 6 in den Kamin. Der Verdampfer 11 enthält Anschlüsse 15 für einen zusätzlichen Umgebungswärmetauscher zur Aufnahme von Niedertemperaturwärme bzw. zur Bereitstellung von Kälte. Über ein Absperrorgan 16 ist am Verdampfer 11 ein Wasserbehälter 17 zur Zwischenspeicherung von Wasser angebaut.

## Patentansprüche

1. Verfahren zur Erwärmung von Wasser mit Hilfe eines periodischen Adsorptionsprozesses bei dem in einer Desorptionsphase aus einer Zeolithfüllung (7) infolge einer Erhitzung durch heiße Rauchgase, Wasserdampf desorbiert wird, dieser Wasserdampf in einem nachgeschalteten Kondensator (5) verflüssigt wird und der verflüssigte Wasserdampf in einem Sammelbehälter (6) zwischengespeichert wird, bis in einer Adsorptionsphase der verflüssigte Wasserdampf in einen Verdampfer (11) abgeleitet wird, von dort unter Wärmeaufnahme Wasser verdampft und der so erzeugte Wasserdampf von der gekühlten Zeolithfüllung (7) adsorbiert wird,
**dadurch gekennzeichnet,**
daß durch die Verdampfung im Verdampfer (11) nicht verdampfendes Wasser zu Eis erstarrt, und daß die Rauchgase nachdem sie Wärme an den Zeolithbehälter (2) abgegeben haben, auch Wärme an den Verdampfer abgeben.

2. Verfahren nach Anspruch 1,
**dadurch gekennzeichnet,** daß
die Rauchgase (2) sich dabei unter die Temperatur des Kondensators (5) abkühlen.

3. Verfahren nach Anspruch 2,
**dadurch gekennzeichnet,** daß
sich die Rauchgase nach der Abkühlung am Verdampfer (11) durch Wärmeaufnahme aus einem wärmeren Apparateteil wieder erwärmen.

4. Verfahren nach Anspruch 1,
**dadurch gekennzeichnet,** daß

während der Adsorptionsphase die Verdampfung aus dem Verdampfer (11) durch ein Absperrorgan (9) unterbrochen ist und das Absperrorgan (9) nur so lange geöffnet ist, solange Kühlbedarf besteht.

5. Verfahren nach Anspruch 1,
**dadurch gekennzeichnet,** daß
die Erwärmung des Wassers vorrangig aus dem Kondensator (5) erfolgt und bei ungenügender Erwärmung zusätzlich Wärme aus dem Zeolith (7) entnommen wird.

6. Verfahren nach Anspruch 5,
**dadurch gekennzeichnet,** daß
der Zeolith (7) dann über heiße Rauchgase erhitzt wird, wenn auch die Erwärmung des Wassers durch den Zeolith (7) nicht aus reicht und/oder die Erhitzung des Zeolithen (7) durch heiße Rauchgase unterbrochen wird, wenn auch die alleinige Erwärmung des Wassers aus dem Kondensator (5) zu stark ist.

7. Verfahren nach Anspruch 1,
**dadurch gekennzeichnet,** daß
zu Beginn der Adsorptionsphase der verflüssigte Wasserdampf vor dem Ableiten in den Verdampfer (11) durch den einsetzenden Verdampfungsvorgang abgekühlt wird.

8. Vorrichtung zur Erwärmung von Wasser mittels eines durch fossile Brennstoffe befeuerten Adsorptionsapparates, bestehend aus:
einer Rauchgasführung mit Wärmetauschern zum Abkühlen der Verbrennungsprodukte,
einem Zeolithbehälter (2) mit einem Zeolith (7) zur Ad- und Desorption von Wasserdampf,
einem daran angekoppelten Kondensator (5),
einem nachgeschalteten Sammelbehälter (6) mit einem Absperrorgan (9),
einem Verdampfer (11),
und einem Heizungskreis (19) zur Aufnahme von Wärme aus dem Zeolithbehälter (2) und dem Kondensator (5),
dadurch gekennzeichnet,
daß der Verdampfer (11) eine Wasserfüllung enthält, die durch teilweise Verdampfung während der Adsorptionsphase zu Eis erstarrt,
daß der Verdampfer mit der Rauchgasführung stromabwärst des Zeolithbehälter in Wärmetausch steht.

9. Vorrichtung nach Anspruch 8,
**dadurch gekennzeichnet,** daß
der Heizkungskreis (19) in einen Kondensatorkreis (21) zur Wärmeaufnahme aus dem Kondensator (5) und einem hierzu parallel geschalteten Sorptionskreis (20) zur Wärmeaufnahme aus dem Zeolithbehälter (2) aufgespalten ist.

10. Vorrichtung nach Anspruch 9, **dadurch gekennzeichnet,** daß
der Kondensatorkreis (21) und der Sorptionskreis (20) über eine Regler-Einrichtung (22) zum Heizkungskreis (19) wieder vereint sind.

11. Vorrichtung nach Anspruch 9 oder 10, **dadurch gekennzeichnet,** daß
der Sorptionskreis (20) so gestaltet ist, daß das ihn durchströmende Wasser rückstandsfrei auslaufen kann.

12. Vorrichtung nach einem der Ansprüche, 9 bis 11,
**dadurch gekennzeichnet,** daß
der Kondensatorkreis (21) einen weiteren Wärmetauscher (23) zur Abkühlung der Rauchgase enthält.

**Claims**

1. A method of heating water by means of a periodic adsorption process wherein, in a desorption phase, steam is desorbed from a zeolite filling (7) as a result of heating by hot flue gases, this steam is liquified in a following condenser (5), and the liquified steam is intermediately stored in a collecting container (6) until, in an adsorption phase, the liquified steam is discharged into a vaporizer (11), from where water is vaporized with the absorption of heat, and the steam generated in this manner is adsorbed by the cooled zeolite filling (7) characterised in that water which does not vaporize as a result of the vaporization in the vaporizer (11) solidifies to form ice, and that the flue gases, having emitted heat to the zeolite container (2), also emit heat to the vaporizer.

2. A method as claimed in Claim 1, characterised in that the flue gases are thereby cooled to below the temperature of the condenser (5).

3. A method as claimed in Claim 2, characterised in that the flue gases, having cooled in the vaporizer (11), are heated again by the absorption of heat from a hotter part of the apparatus.

4. A method as claimed in Claim 1, characterised in that during the adsorption phase the vaporization of the vaporizer (11) is interrupted by a shut-off device (9) and the shut-off device (9) is opened only as long as a cooling requirement exists.

5. A method as claimed in Claim 1, characterised in that the heating of the water takes place preferentially from the condenser (5) and in the event of insufficient heating, heat is additionally obtained from the zeolite (7).

6. A method as claimed in Claim 5, characterised in that the zeolite (7) is heated via hot flue gases if the heating of the water by the zeolite (7) is also insufficient and/or the heating of the zeolite (7) by hot flue gases is interrupted if the sole heating of the water by the condenser (5) is too great.

7. A method as claimed in Claim 1, characterised in that at the beginning of the adsorption phase, before it is discharged into the vaporizer (11) the liquified steam is cooled by the commencing vaporization process.

8. A device for heating water by means of an adsorption apparatus fired by fossil fuels, comprising: a flue gas cycle including heat exchangers for cooling the combustion products, a zeolite container (2) containing a zeolite (7) for the adsorption and desorption of steam, a condenser (5) coupled thereto, a following collecting container (6) with a shut-off device (9), a vaporizer (11), and a heating cycle (19) for the absorption of heat from the zeolite container (2) and the condenser (5), characterized in that the vaporizer (11) contains a water filling which solidifies to form ice during the adsorption phase as a result of partial vaporization, and that the vaporizer is connected in heat-exchanging fashion to the flue gas cycle downstream of the zeolite container.

9. A device as claimed in Claim 8, characterized in that the heating cycle (19) is sub-divided into a condenser cycle (21) for the absorption of heat from the condenser (5) and a sorption cycle (20), arranged in parallel thereto, for the absorption of heat from the zeolite container (2).

10. A device as claimed in Claim 9, characterised in that the condenser cycle (21) and the sorption cycle (20) are recombined via a regulating device (22) to form the heating cycle (19).

11. A device as claimed in Claims 9 or 10 characterized in that the sorption cycle (20) is designed such that the water which flows through it can escape without residue.

12. A device as claimed in one of Claims 9 to 11, characterized in that the condenser cycle (21) contains a further heat exchanger (23) for the cooling of the flue gases.

**Revendications**

1. Procédé de chauffage d'eau à l'aide d'un processus périodique d'adsorption, qui consiste à désorber dans une phase de désorption de la vapeur d'eau d'un garnissage de zéolite (7), à la suite d'un chauffage par des gaz de fumée chauds, à liquéfier cette vapeur d'eau dans un condenseur (5) en aval, et à stocker intermédiairement la vapeur d'eau liquéfiée dans une cuve collectrice (6), jusqu'à ce que, dans une phase d'adsorption, la vapeur d'eau liquéfiée soit envoyée dans un évaporateur (11), à y évaporer l'eau par absorption de chaleur et à adsorber la vapeur d'eau ainsi produite par le garnissage de zéolite (7) refroidi, caractérisé en ce qu'il consiste à solidifier en glace l'eau qui n'a pas été évaporée par l'évaporation dans l'évaporateur (11), et à faire céder également de la chaleur à l'évaporateur par les gaz de fumée, après qu'ils ont cédé de la chaleur au récipient à zéolite (2).

2. Procédé suivant la revendication 1, caractérisé en ce qu'il consiste à refroidir les gaz de fumée en-dessous de la température du condenseur (5).

3. Procédé suivant la revendication 2, caractérisé en ce qu'il consiste, après le refroidissement dans l'évaporateur (11), à réchauffer les gaz de fumée par absorption de chaleur provenant d'une partie plus chaude de l'installation.

4. Procédé suivant la revendication 1, caractérisé en ce qu'il consiste à interrompre, pendant la phase d'adsorption, l'évaporation de l'évaporateur (11) par un organe d'arrêt (9), et à n'ouvrir l'organe d'arrêt (9) que tant que l'on a besoin d'un refroidissement.

5. Procédé suivant la revendication 1, caractérisé en ce qu'il consiste à effectuer le chauffage de l'eau prioritairement à partir du condenseur (5) et, en cas de chauffage insuffisant, à prélever de la chaleur supplémentaire du zéolite (7).

6. Procédé suivant la revendication 5, caractérisé en ce qu'il consiste à chauffer le zéolite (7) par des gaz de fumée chauds, si le chauffage de l'eau par le zéolite (7) ne suffit pas et/ou à interrompre le chauffage du zéolite (7) par des gaz de fumée chauds, si le chauffage de l'eau seulement par le condenseur (5) est trop important.

7. Procédé suivant la revendication 1, caractérisé en ce qu'il consiste, au début de la phase d'adsorption, à refroidir la vapeur d'eau liquéfiée par le processus d'évaporation mis en oeuvre, avant de l'envoyer dans l'évaporateur (11).

8. Installation de chauffage d'eau au moyen d'un appareil d'adsorption alimenté en combustibles fossiles, constitué de :
   un conduit pour le gaz de fumée, ayant des échangeurs de chaleur destinés à refroidir les produits de combustion,
   un récipient à zéolite (2) avec un zéolite (7) destiné à l'adsorption et la désorption de la vapeur d'eau,
   un condenseur (5) qui y est couplé,
   une cuve collectrice aval (6), possédant un organe d'arrêt (9),
   un évaporateur (11),
   et un circuit de chauffage (19) destiné à absorber la chaleur provenant de la cuve à zéolite (2) et du condenseur (5)
   caractérisée en ce que,
   l'évaporateur (11) contient une charge d'eau qui est solidifiée en glace par évaporation partielle, pendant la phase d'adsorption,
   l'évaporateur est en relation d'échange thermique avec le conduit de gaz de fumée en aval du récipient à zéolite.

9. Installation suivant la revendication 8, caractérisée en ce que le circuit de chauffage (19) est subdivisé en un circuit du condenseur (21) destiné à absorber de la chaleur provenant du condenseur (5) et en un circuit de sorption (20) monté parallèlement à celui-ci et destiné à absorber de la chaleur provenant du récipient à zéolite (2).

10. Installation suivant la revendication 9, caractérisée en ce que le circuit du condenseur (21) et le circuit de sorption (20) sont réunis à nouveau en un circuit de chauffage (19), par un dispositif à régulateur (22).

11. Installation suivant la revendication 9 ou 10, caractériseé en ce que le circuit de sorption (20) est conformé de façon que l'eau qui y passe puisse en sortir en étant exempte de résidus.

12. Installation suivant l'une des revendications 9 à 11, caractérisée en ce que le circuit du condenseur (21) comporte un autre échangeur de chaleur (23), destiné à refroidir les gaz de fumée.

Fig. 1

Fig. 2